# EUROPÄISCHE PATENTSCHRIFT

(11) **EP 0 739 704 B1**
(45) Veröffentlichungstag und Bekanntmachung des Hinweises auf die Patenterteilung: **28.07.1999**
(21) Anmeldenummer: 96105432.7
(22) Anmeldetag: 04.04.1996
(51) Int. Cl.: B29C 67/00, G03C 9/08

(54) **Vorrichtung zum Herstellen eines Objektes mittels Stereolithographie**
Device for producing an object using stereolithography
Dispositif pour produire un objet par stéréolithographie

(30) Priorität: 25.04.1995 DE 19515165
(43) Veröffentlichungstag der Anmeldung: 30.10.1996
(73) Patentinhaber: 3D SYSTEMS, INC., Valencia California 91355 (US)
(72) Erfinder: Serbin, Jürgen, 82166 Gräfelfing (DE); Wolff, Peter, 85649 Brunnthal (DE); Krug, Gabriele, 80809 München (DE)
(74) Vertreter: Hess, Peter K., Dipl.-Phys.

(56) Entgegenhaltungen:
- EP-A- 0 361 847
- EP-A- 0 450 762
- EP-A- 0 499 485
- GB-A- 2 262 817
- US-A- 5 174 931

## Beschreibung

Die Erfindung betrifft eine Vorrichtung zum Herstellen eines Objektes mittels Stereolithographie nach dem Oberbegriff des Patentanspruches 1.

Eine derartige Vorrichtung ist aus der DE 41 34 265 C bekannt. Der dort beschriebene Abstreifer kann mit einer Antihaftbeschichtung oder aus einem Material mit schlechten Haftungseigenschaften gebildet sein. Weist ein solcher Abstreifer niedrige Adhäsionskräfte auf, besteht die Gefahr, daß beim Abstreifen der Kontakt zwischen Abstreifer und dem flüssigen Kunststoffmaterial lokal abreißt. Das kann zum sogenannten "dewetting" führen. Wird der Abstreifer hingegen aus einem Material mit großer Oberflächenspannung ausgebildet, treten erfahrungsgemäß unregelmäßige Beschichtungen auf, da das Kunststoffmaterial an der in Fahrtrichtung des Abstreifers gesehenen Rückseite wieder ansteigt.

Aus der DE 94 15 849 U1 ist eine Vorrichtung nach dem Oberbegriff des Patentanspruches 1 bekannt. Der dort gezeigte Abstreifer weist wenigstens zwei Abstreifelemente auf.

Es sind verschiedene Beschichtungsverfahren in der Stereolithographie bekannt. Gemäß der EP 0 171 069 wird eine flüssige Schicht des lichtaushärtbaren Harzes durch Absenken des Objektes in einem Bad um mehr als die gewünschte Schichtdicke und anschließendes Anheben des Objektes auf die eine der vorgesehenen Schichtdicke entsprechende Höhe unterhalb der Badoberfläche aufgebracht. Aus der EP 0 250 121 ist das Aufbringen des Materiales für die Schicht von oben über einen Zulauf, aus der WO91/12120 über ein Sprührohr bekannt. Bei den genannten Beschichtungsverfahren ist die Schnelligkeit der Einstellung einer gewünschten Schichtdicke noch nicht optimal.

Um die Einstellung der Schichtdicke zu beschleunigen sind Beschichtungsverfahren bekannt, bei denen ein Abstreifer verwendet wird. Im einfachsten Fall, der in der DE-C-41 34 265 beschrieben ist, wird der das zu bildende Objekt tragende Träger in einem Bad aus flüssigem, lichaushärtbaren Kunststoffmaterial um ein der gewünschten Schichtdicke entsprechendes Maß abgesenkt, wobei unverfestigtes Material vom Rand der zuletzt verfestigten Schicht her über diese fließt. Zum Beschleunigen der Einstellung der gewünschten Schichtdicke mit dem Abstreifer wird das Material über die zuletzt verfestigte Schicht gestrichen. Der Beschichtungsvorgang kann auch durch Absenken des Trägers in dem Bad um mehr als die vorgesehene Schichtdicke und anschließendes Überstreichen mit dem Abstreifer beschleunigt werden. Diese Verfahren weisen jedoch den Nachteil auf, daß die erzeugte Schichtdicke erheblich höher als die gewünschte Schichtdicke ist. Eine der Anmelderin bekannte Lösung für dieses Problem besteht darin, daß die durch das Absenken des Trägers in dem Bad verdrängte Harzmenge aufgefangen wird und durch eine kontinuierlich arbeitende Niederdruckpumpe während des Abstreifvorganges direkt vor dem Abstreifer kontinuierlich wieder aufgebracht wird, so daß ein quasikontinuierliches Beschichten stattfindet. Eine weitere bekannte Variante eines Beschichtungsverfahrens ist das sogenannte Beschichter-Rinnen-Verfahren, bei dem mit einem diskreten Pumpvorgang die beim Absenken verdrängte Harzmenge auf einmal in eine sich in Abstreifrichtung bzw. Wischrichtung vor dem Abstreifer befindliche Beschichterrinne gepumpt wird und von dort durch einen an dieser befindlichen Ausfluß direkt vor den Abstreifer abgegeben wird. Die Abgabe der Harzmenge aus der Beschichterrinne erfolgt exponentiell über die zu beschichtende Fläche in Abhängigkeit von dem momentanen Füllstand in der Beschichterrinne, d.h. je weniger Harz in der Beschichterrinne vorhanden ist, desto weniger wird abgegeben. Dies führt zu einer über die Beschichtungsstrecke abnehmenden Schichtdicke.

Eine weitere Beschichtungsvorrichtung ist in der EP 0 450 762 beschrieben. Offenbart ist ein Beschichter, der in seinem unteren Bereich einen Auslaß aufweist und der zusammen mit einem oder mehreren Abstreifern über die Oberfläche bewegt wird, um eine weitere Schicht aufzutragen. Der Beschichter wird dabei zuvor in die Flüssigkeit eingetaucht, um flüssiges Material zum Beschichten aufzunehmen.

Ein generelles Problem bei der Verwendung eines bekannten Abstreifers besteht in der Wechselwirkung des Abstreifers mit dem Harz bzw. dem verwendeten Kunststoffmaterial, was zu dem bereits erwähnten "dewetting" führt.

Ferner tritt, wie in den Figuren 8 und 9 gezeigt ist, aufgrund der Umströmung des Abstreifers 99 innerhalb von "closed volumes" 100, d.h. von verfestigtem Harz 101 umschlossenen Bereichen von flüssigem Harz eine Überhöhung der Badoberfläche auf, was zu Maßabweichungen des Bauteils, insbesondere des Bauteils innerhalb des "closed volume" führt (CV+, CV-Effekte). Ein weiterer nachteiliger Effekt des bekannten Beschichtungsverfahrens, bei dem ein Abstreifer verwendet wird, ist die an der Grenze zwischen zuvor verfestigter Schicht und unverfestigtem Harz erzeugten Nase 102 beim Beschichten, die in Fig. 10 gezeigt ist. Auch das Erzeugen von konkaven bzw. konvexen Flächen durch die Umströmung des Abstreifers ist möglich und führt zu Bauteilungenauigkeiten.

Es ist Aufgabe der Erfindung, eine Vorrichtung zum Herstellen eines dreidimensionalen Objektes mittels Stereolithographie bereitzustellen, mit der eine Verbesserung der Bauteilgenauigkeit möglich ist. Insbesondere soll die Einstellung der Schichtdicke erleichtert werden.

Die Aufgabe wird gelöst durch eine Vorrichtung nach Patentanspruch 1.

Weiterbildungen sind in den Unteransprüchen gegeben.

Weitere Merkmale und Zweckmäßigkeiten der Erfindung ergeben sich aus der Beschreibung von Ausführungsbeispielen anhand der Figuren. Von den Figuren zeigen:

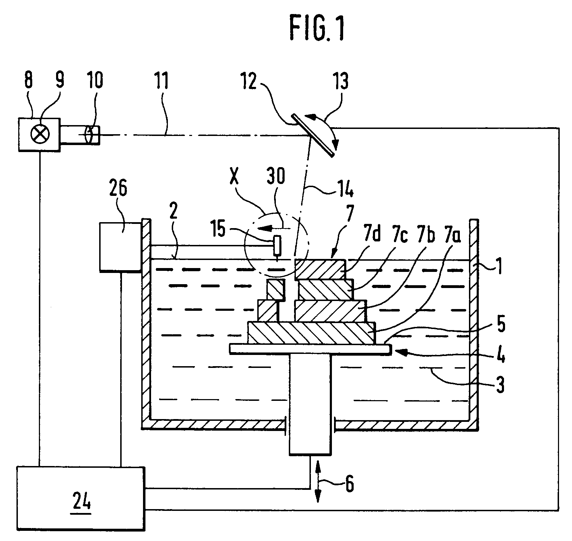

- Fig. 1: eine schematische Darstellung der Vorrichtung einer ersten Ausführungsform der Erfindung;

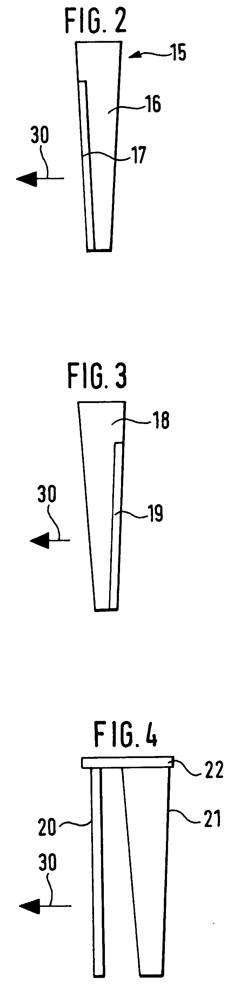

- Fig. 2: eine erste Ausführungsform des Abstreifers;
- Fig. 3: eine zweite Ausführungsform des Abstreifers;
- Fig. 4: eine weitere abgewandelte Ausführungsform des Abstreifers;

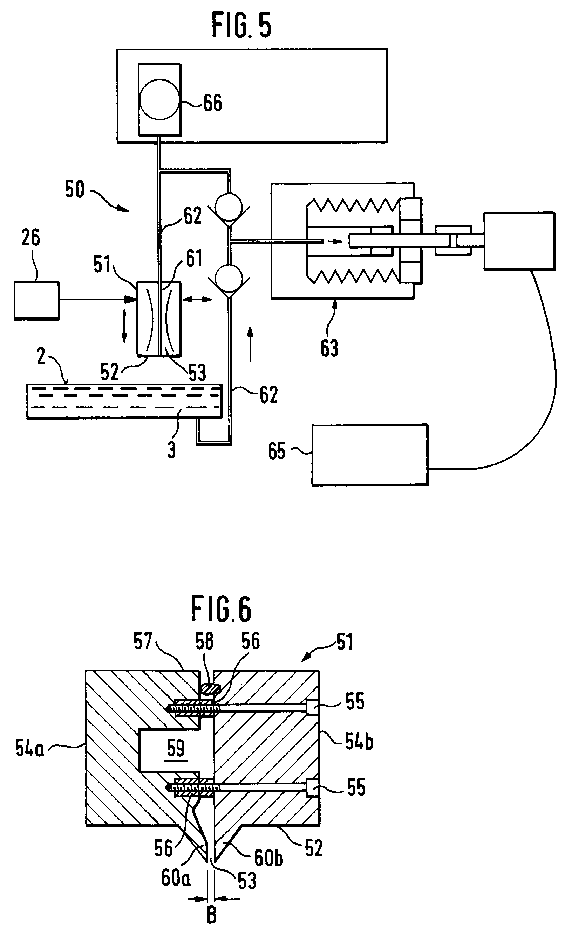

- Fig. 5: eine schematische Teilansicht einer zweiten Ausführungsform der Vorrichtung;
- Fig. 6: eine Schnittansicht der Dosiervorrichtung von Fig. 5;
- Fig. 7a-7b: eine schematische Schnittansicht des Beschichtungsvorganges gemäß einer Ausführungform;

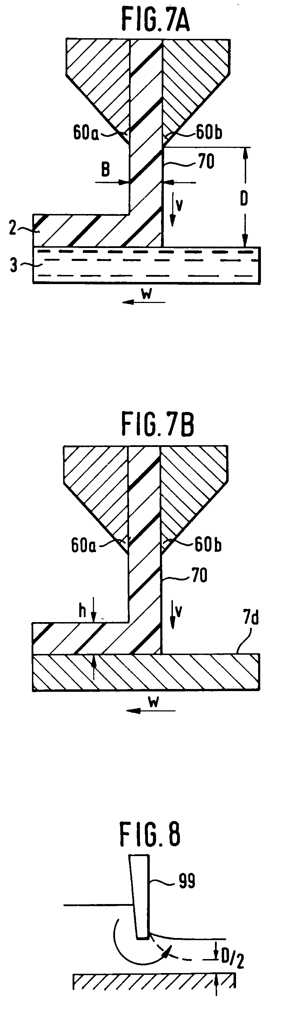

- Fig. 8: eine schematische Ansicht eines bei Verwendung eines herkömmlichen Abstreifers auftretenden Problems;

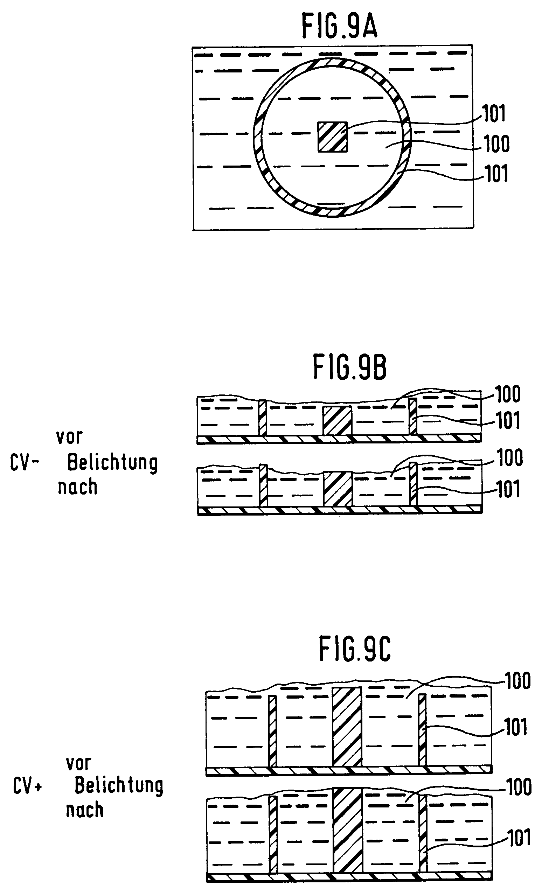

- Fig. 9a - 9c: eine schematische Ansicht der bei Verwendung eines herkömmlichen Abstreifers auftretenden Probleme beim Vorhandensein von "closed volumes"; und

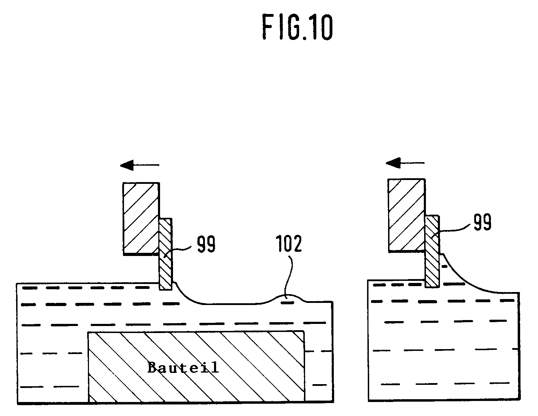

- Fig. 10: eine schematische Ansicht eines weiteren bei Verwendung eines herkömmlichen Abstreifers auftretenden Problems.

Die Vorrichtung wird nun anhand der Figuren 1 bis 7 erläutert.

Ein auf seiner Oberfläche offener Behälter 1 ist bis zu einem Niveau bzw. einer Oberfläche 2 mit einem lichthärtbaren, flüssigen Kunststoffmaterial 3, beispielsweise einem UV-aushärtbaren Harz, gefüllt. Im Behälter 1 befindet sich im Bereich des Kunststoffs 3 ein Träger 4 mit einer im wesentlichen ebenen und horizontalen Trägerplatte 5, die parallel zur Oberfläche 2 angeordnet ist und mittels einer schematisch angedeuteten Verschiebe- oder Höheneinstellvorrichtung 6 senkrecht zur Oberfläche 2 bzw. zur Trägerplatte 5 auf und ab verschoben und positioniert werden kann.

Auf der Trägerplatte 5 befindet sich das Objekt 7, das aus einer Mehrzahl von Schichten 7a, 7b, 7c und 7d, die sich jeweils parallel zur Oberfläche 2 und zur Trägerplatte 5 erstrecken, in der später beschriebenen Weise aufgebaut wird.

Eine Vorrichtung 8 zum Verfestigen der an die Oberfläche angrenzenden obersten Schicht 7d enthält eine Beleuchtungsvorrichtung 9 mit einer Lichtquelle, die über eine Optik 10 einen gebündelten Lichtstrahl 11 erzeugt. Etwa mittig oberhalb des Behälters 1 ist ein Umlenkspiegel 12 angeordnet, der kardanisch aufgehängt ist und von einer schematisch angedeuteten Schwenkvorrichtung 13 so geschwenkt werden kann, daß der auf den Spiegel 12 gerichtete Lichtstrahl 11 vom Spiegel 12 als reflektierter Lichtstrahl 14 an im wesentlichen jeder Stelle der Oberfläche 2 positioniert werden kann. Alternativ können in bekannter Weise auch zwei rotierende Spiegel, jeweils einer für eine Koordinatenrichtung, verwendet werden.

An der offenen Oberseite des Behälters 1 ist ein in Figur 1 schematisch angedeuteter Abstreifer 15 angeordnet, der sich im wesentlichen quer über den oben offenen Bereich des Behälters 1 erstreckt und mit einer Verschiebevorrichtung 26 zum Verschieben des Abstreifers 15 in einer horizontalen Ebene über die Oberfläche 2 in einer Richtung 30 im wesentlichen senkrecht zur Erstreckung des Abstreifers 15 gekoppelt ist.

Die Verschiebevorrichtung 26 ist so ausgebildet, daß sie eine Verschiebung des Abstreifers 15 mit einer einstellbaren, veränderlichen Geschwindigkeit erlaubt.

Ein Rechner 24 ist mit der Beleuchtungsvorrichtung 9, mit der Schwenkvorrichtung 13, mit der Höheneinstellvorrichtung 6 und mit der Verschiebevorrichung 26 zur Durchführung der an sich bekannten Stereolithographie gekoppelt.

In den Figuren 2 bis 4 sind Ausführungsformen von Abstreifern gezeigt, wobei die Vorschubrichtung während des eigentlichen Wischervorganges jeweils durch den Pfeil 30 angedeutet ist.

Die äußere Form und Abmessungen des Abstreifers 15 werden in an sich bekannter Weise bestimmt. Bei der in Fig. 2 gezeigten ersten Ausführungsform weist der Abstreifer 15 einen Grundkörper 16 aus einem ersten Material auf. Auf in der durch den Pfeil 30 angedeuteten Bewegungsrichtung vornliegenden vorderen Oberfläche ist eine mit dem zu glättenden Material 3 in Kontakt bringbare Materialschicht, die einen ersten Oberflächenbereich 17 bildet, aufgebracht. Dieses Aufbringen kann zum Beispiel durch Kleben auf den Grundkörper geschehen. In dem Ausführungsbeispiel weist der Grundkörper eine entsprechende Ausnehmung auf, in die das den ersten Oberflächenbereich bildende Beschichtungsmaterial beispielsweise durch Aufkleben aufgebracht ist. Im ersten Ausführungsbeispiel ist der Grundkörper 16 aus einem Material aus Viton oder PTFE oder einem Material mit entsprechend niedrigem Oberflächenspannungswert gebildet. Auf der Vorderseite ist eine Beschichtung aus Aluminium oder Stahl oder einem Material mit entsprechend ähnlich hohem Oberflächenspannungswert vorgesehen.

Die in Fig. 3 gezeigte abgewandelte Ausführungsform unterscheidet sich von dem vorhergenannten dadurch, daß ein Grundkörper 18 aus einem Material wie Aluminium oder Stahl oder einem Material mit entsprechend hohem Oberflächenspannungswert gebildet ist. Die Rückseite ist auf einem Oberflächenbereich 19 mit einem Material aus Viton oder PTFE oder einem Material mit entsprechend niedrigem Oberflächenspannungswert beschichtet. Diese Beschichtung kann durch Aufkleben auf der Oberfläche geschehen. In den gezeigten Ausführungsbeispielen weist der Grundkörper 18 auf seiner Rückseite eine Ausnehmung auf, in der eine Schicht aus Viton bzw. PTFE zur Bildung des zweiten Oberflächenbereiches 19 aufgebracht ist.

Bei der in Fig. 4 gezeigten Ausführungsform ist der Abstreifer, aus in der durch Pfeil 30 angedeuteten Vorschubrichtung gesehen, aus einem Vorabstreifer 20 und einem eigentlichen Abstreiferelement 21 gebildet. Die beiden sind an ihrer Oberseite mit einem gemeinsamen Joch 22 verbunden, mit dem der so gebildete Abstreifer in einer Halterung der Vorrichtung montiert ist, die mit dem Antrieb 16 verbunden ist. Der in Vorschubrichtung vorn liegende Vorabstreifer 20 ist aus Aluminium oder Stahl oder einem Material mit entsprechendem hohen Oberflächenspannungswert ausgebildet. Das nachfolgende Abstreiferelement 21 ist aus einem Material wie Viton oder PTFE oder einem Material mit einem entsprechenden niedrigen Oberflächenspannungswert gebildet.

Im Betrieb wird erreicht, daß durch die relativ hohe Oberflächenspannung auf der Vorderseite ein Abreißen des Harzfilms verhindert wird. Gleichzeitig wird durch den niedrigen Oberflächenspannungswert auf der Rückseite des Abstreifers das Aufbauen von zu viel Material verhindert.

Ein weitere Ausführungsform der Vorrichtung, die in den Figuren 5 bis 7 dargestellt ist, weist zusätzlich oder anstelle des in den Figuren 1 bis 4 gezeigten Abstreifers 15 eine Beschichtungsvorrichtung 50 auf, mit der die aufgebrachte Menge bzw. das Harzvolumen so genau dosiert werden kann, daß sich die gewünschte Schichtdicke einstellt, ohne daß der Abstreifer als Mittel zur Schichtdickeneinstellung benötigt wird.

Die Beschichtungsvorrichtung 50 weist eine oberhalb der Badoberfläche 2 angeordnete Dosiervorrichtung 51 auf, die sich quer über die Arbeitsfläche bzw. die Badoberfläche 2 erstreckt, und auf ihrer der Badoberfläche 2 zugewandten Unterseite 52 einen sich über die gesamte Unterseite erstreckenden Spalt 53 aufweist. Wie in Fig. 6 gezeigt ist, weist die Dosiervorrichtung 51 zwei Teile bzw. Backen 54a und 54b auf, welche in einer Ebene senkrecht zur Badoberfläche 2 einen im wesentlichen recheckigen Querschnitt aufweisen. Die Backen 54a und 54b sind miteinander über Schrauben 55 und Abstandshalter 56 so verschraubt, daß ihre einander zugewandten Fläche zwischen sich den Spalt 53 der Dosiervorrichtung 51 bilden. An der der Badoberfläche 2 bzw. der Unterseite 52 der Dosiervorrichtung abgewandten Seite 57 ist der Spalt 53 zwischen den Teilen 54a und 54b über eine flexible Dichtung 58, beispielsweise aus Gummi oder Silikon abgedichtet. Eine der Backen 54a weist in ihrer der anderen Backe 54b zugewandten Seite eine sich über die gesamte Breite der Badoberfläche 2 erstreckende kanalförmige Ausnehmung 59 auf, die zur Aufnahme einer bestimmten Menge an Harz über einen in Fig. 6 nicht gezeigten Zulauf dient, so daß in der kanalförmigen Ausnehmung 59 stets ein kleines Harzreservoir gehalten werden kann. Die kanalförmige Ausnehmung 59 ist an ihrem nicht mit dem Zulauf verbundenen Ende geschlossen, so daß das Harz nur über den Spalt 53 austreten kann. An der der Badoberfläche 2 zugewandten Unterseite 52 weisen die Backen 54a und 54b jeweils an den einander zugewandten Seiten einen im Querschnitt näherungsweise dreieckförmigen und sich jeweils über die gesamte Breite der Badoberfläche 2 erstreckenden Ansatz 60a bzw. 60b auf. Die Ansätze 60a, 60b bilden zusammen mit dem dazwischenliegenden Spalt 53 eine Art Düse für den Austritt des Harzes. Die Spaltbreite B, d.h. der Abstand der beiden Backen 54a und 54b ist über die geeignete Wahl der Abstandshalter 56 einstellbar. Üblicherweise beträgt die Spaltbreite B etwa eine Schichtdicke, d.h. einige zehntel Millimeter. Die Dosiervorrichtung 51 ist über eine nicht gezeigte Höheneinstellvorrichtung in ihrer Höhe über der Badoberfläche 2 einstellbar. In der beschriebenen Ausführungsform ist die Höhe so eingestellt, daß sich die Austrittsöffnung der Düse 60a, 60b unmittelbar über der Badoberfläche 2 befindet, so daß sie diese gerade noch nicht berührt.

Zusätzlich ist bei dieser Ausführungsform ein nicht gezeigter Abstreifer an der Dosiervorrichtung 51 an der Seite angebracht, die in Bewegungsrichtung beim Schichtauftrag hinter dem Spalt 53 liegt. Der Abstreifer dient zur Glättung des aus dem Spalt 53 austretenden Materiales.

Die Dosiervorrichtung ist mit der bereits erwähnten Verschiebevorrichtung 26 verbunden, die so angesteuert ist, daß sie eine Verschiebung der Dosiervorrichtung 51 mit einer einstellbaren, veränderlichen Geschwindigkeit w parallel zur Badoberfläche 2 erlaubt.

Wie insbesondere in Fig. 5 gezeigt ist, steht ein Zulauf 61 des Spaltes 53 der Dosiervorrichtung 51 über eine Leitung 62 mit dem Harzbad 3 in dem Behälter 1 in Verbindung, wobei eine leckfrei arbeitende, kontinuierlich fördernde Pumpe 63 zwischen Bad und Dosiervorrichtung 51 geschaltet ist. Die Pumpe 63 fördert das Harz 3 aus dem Behälter 1 über die Leitung 62 in die Dosiervorrichtung 51. Bevorzugt ist die Pumpe 63 als Balgpumpe mit großem Hubvolumen ausgebildet. Das Hubvolumen der Pumpe 63 ist so groß, daß während eines Beschichtungsvorganges nur ein Hub notwendig ist. Der von der Pumpe 63 gelieferte Druck beträgt in dieser Ausführungsform etwa 1 bar. Die Pumpe 63 wird über eine Steuerung 65 derart angesteuert, daß sie das Harz 3 mit einem konstanten, voreingestellten Volumenstrom unabhängig vom Gegendruck z.B. aufgrund unterschiedlicher Viskosität des Kunststoffes fördert.

Die Steuerung 65 ist ferner so ausgebildet, daß der Fördervolumenstrom des zu fördernden Harzes 3 über die gesamte Länge der Verschiebung der Dosiervorrichtung 51 geregelt werden kann, womit eine Dosierung des durch den Spalt 53 austretenden Harzes 3 erreicht wird. Die Steuerung 65 der Pumpe steht mit der zentralen Steuerung 24 in Verbindung, so daß die Ansteuerung der Pumpe 63 mit einem in dieser zentralen Steuerung enthaltenen Rechner geregelt werden kann. Damit kann der durch den Spalt 53 austretende Harzvolumenstrom in Abhängigkeit von der jeweiligen gewünschten Schichtdicke geregelt werden.

In einer Ausführungsform, wie in Fig. 7 gezeigt ist, befindet sich der Ansatz 60a, 60b der Dosiervorrichtung 51 nicht direkt über der Badoberfläche 2 sondern in einem Abstand D, beispielsweise 3 bis 5 Millimiter, darüber. In diesem Fall wird die Pumpe 63 mit einem geringen Hubvolumen kontinuierlich betrieben, d.h. pro Schichtauftrag sind mehrere Hübe erforderlich. Die Pumpe 63 erreicht in diesem Fall einen hohen Förderdruck von bis zu 5 bar. Um einen kontinuierlichen Förderdruck zu gewährleisten ist die Pumpe 63 mit einem Druckspeicher 66 verbunden, über den ein Gasvolumen in die Leitung 62 zum Konstanthalten des hohen Förderdruckes eingebracht wird.

Beim Arbeiten mit so hohen Drücken ist es von Vorteil, keine bewegten harzführenden Leitungen zu verwenden, um vor dem unkontrollierten Austreten von Harz sicher zu sein. In diesem Fall wird die Pumpe 63 mit der Dosiervorrichtung mitgeführt.

Ferner ist es möglich, eine Meßvorrichtung zum Messen des Niveaus der Oberfläche der abgelegten Schicht oder der Oberfläche eines Referenzbauteiles vorzusehen. Das Referenzbauteil kann beispielsweise ein am Rand des Arbeitsbereiches mitgebauter Würfel sein. Durch die Meßvorrichtung wird die Dicke der aufzubringenden Schichten vorgegeben.

Bei dem Verfahren werden unter Verwendung der in Fig. 5 gezeigten Beschichtungsvorrichtung 50 für jede zu verfestigende Schicht des Objektes die folgenden Schritte ausgeführt.

Vor Beginn des Bauprozesses wird die Spaltbreite B über die Wahl geeigneter Abstandshalter auf etwa das Maß der gewünschten Schichtdicke eingestellt. Die Einstellung erfolgt auch in Abhängigkeit von der Viskosität des verwendeten Harzes.

In einem ersten Schritt wird der Träger 4 in dem Behälter 1 mittels der Höheneinstellvorrichtung 6 um das der gewünschten Schichtdicke entsprechende Maß abgesenkt.

Anschließend fördert die Pumpe 63 eine bestimmte Menge an Harz 3 aus dem Behälter 1, wobei das Hubvolumen der Förderpumpe so eingestellt wird, daß die geförderte Menge für den Auftrag einer neuen Schicht ausreicht. Anschließend wird die Verschiebevorrichtung 26 so gesteuert, daß die Dosiervorrichtung über die Badoberfläche 2 bewegt wird, wobei das über die Leitung 62 in den Spalt 53 fließende Harz über den Spalt bzw. die Düse 60a, 60b der Dosiervorrichtung 51 auf die Oberfläche der zuvor verfestigten Schicht aufgebracht wird. Der in Bewegungsrichtung hinter der Dosiervorrichtung 51 angebrachte Abstreifer 15 glättet dabei die aufgetragene Schicht des Harzes 3. Eine gleichmäßige Verteilung des aufgetragenen Materiales in Bewegungsrichtung der Dosiervorrichtung wird durch die Abstimmung des Fördervolumenstromes und der Bewegungsgeschwindigkeit w der Dosiervorrichtung erreicht. Zur Vermeidung von Bauteilfehlern kann das Beschichtungsvolumen während der Bewegung der Dosiervorrichtung variiert werden. Beispielsweise können Bauteile im Baufeld so positioniert sein, daß sie mit unterschiedlichen Harzmengen beschichtet werden können.

Um den in Fig. 9c gezeigten CV+ Effekt zu vermeiden ist es vorteilhaft, das Hubvolumen der Pumpe 63 so einzustellen, daß es dem 1,8fachen des Schichtvolumens entspricht.

Nach Auftrag einer Schicht wird diese an den dem Objekt entsprechenden Stellen durch den Laserstrahl 14 verfestigt. Dazu wird die Schwenkvorrichtung 13 so gesteuert, daß der abgelenkte Lichtstrahl 14 an den gewünschten Stellen der Schicht auftrifft und dort das Harz 3 aushärtet.

Die beschriebenen Schritte werden sooft wiederholt, bis das Objekt 7 fertiggestellt ist.

In einer weiteren Ausführungsform des Verfahrens wird, wie in den Figuren 7a und 7b gezeigt ist, die Dosiervorrichtung 51 zu Beginn des Bauprozesses in ihrer Höhe so eingestellt, daß sich die Düse 60a, 60b im Abstand D von beispielsweise 3-5mm oberhalb der Badoberfläche 2 befindet.

Wie im vorher beschriebenen Ausführungsbeispiel wird in einem ersten Schritt der Träger 4 in dem Behälter 1 um das der gewünschten Schichtdicke entsprechende Maß abgesenkt. Die Pumpe 63 wird mit hohem Förderdruck bis zu 5 Bar betrieben. Hierzu wird über die Steuerung 65 ein geringeres Hubvolumen als das entsprechende Schichtvolumen eingestellt, so daß die Pumpe 63 während eines Beschichtungsvorganges mehrere Hübe ausführt und somit kontinuierlich pumpt. Der Druckspeicher 66 gewährleistet dabei einen konstanten Druck des Harzes 3 in der Zuleitung 61 zu dem Spalt 53. Durch den hohen Förderdruck ist die Geschwindigkeit v des Harzes 3 in dem Spalt 53 so hoch, daß sich ein Film 70 aufbaut, der, wie in Fig. 7a und 7b gezeigt ist, an der Unterseite der Düse 60a, 60b austritt und auf der zuvor verfestigten Schicht bzw. unverfestigten Bereichen der vorherigen Schicht abgelegt wird. Die Geschwindigkeit w der Bewegung der Dosiervorrichtung 51 und der Förderdruck der Pumpe 63 werden so eingestellt, daß das aus der Düse 60a, 60b austretende harz einen Film 70 mit einer der gewünschten Schichtdicke h entsprechenden Breite bildet, der auf den verfestigten Bereichen der vorherigen Schicht (Fig. 7b) bzw. auf den unverfestigten Bereichen der vorherigen Schicht (Fig. 7a) abgelegt wird. In diesem Fall kommt es nicht zu einer Wechselwirkung zwischen Harz 3 an der Badoberfläche 2 und dem aus der Düse 60a, 60b austretenden Material, so daß insbesondere die nachteiligen Effekte wie die in Fig. 9b und 9c gezeigten CV- bzw. CV+ Effekte oder die in Fig. 10 gezeigte Nase vermieden werden.

Anschließend wird wie bei dem vorherigen Ausführungsbeispiel die Schicht an den dem Objekt entsprechenden Stellen verfestigt.

Die Vorteile der beschriebenen Beschichtungsverfahren und der zugehörigen Vorrichtungen sind einerseits die Vermeidung der oben genannten nachteiligen Effekte und andererseits die leichte Einstellung und Variation der Schichtdicke. Die Schichtdicke läßt sich einfach einstellen durch die Spaltweite, die Geschwindigkeit der Bewegung der Dosiervorrichtung und das eingestellte Fördervolumen der Pumpe. Ein hoher Förderdruck und entsprechend hoher Druckabfall in dem engen Spalt eliminieren den Einfluß der Schwerkraft auf die aus dem Spalt austretende Menge und erhöhen daher die Genauigkeit der Schichtdicke. Ferner kann durch die Variierung des Fördervolumens der Pumpe sowohl von Schicht zu Schicht als auch beim Ablegen einer Schicht die Schichtdicke leicht an die gewünschten Bauteileigenschaften angepaßt werden.

## Patentansprüche

1. Vorrichtung zum Herstellen eines Objektes mittels Stereolithographie,
mit einem Behälter (1) zur Aufnahme eines Bades aus flüssigem oder pulverförmigem, durch Einwirkung von elektromagnetischer Strahlung verfestigbarem Material (3), einem Träger (4) zum Positionieren des Objektes relativ zur Oberfläche (2) des Bades und einer Vorrichtung (8) zum Verfestigen einer Schicht des Materials (3) an der Oberfläche mittels elektromagnetischer Strahlung und
mit einem entlang der Oberfläche (2) des Bades verschiebbaren Abstreifer (15) und einem Antrieb (26) zum Bewegen des Abstreifers (15) entlang der Oberfläche (2), wobei der Abstreifer (15) einen sich quer zur Bewegungsrichtung erstreckenden vornliegenden ersten Oberflächenbereich und einen diesem gegenüberliegenden hinteren zweiten Oberflächenbereich aufweist,
dadurch gekennzeichnet,
daß der erste Oberflächenbereich einen ersten Oberflächenspannungswert und der zweite Oberflächenbereich einen von dem ersten verschiedenen zweiten Oberflächenspannungswert aufweist.

2. Vorrichtung nach Anspruch 1, dadurch gekennzeichnet, daß der Oberflächenspannungswert des bei dem Glättvorgang in Vorschubrichtung vornliegenden ersten Oberflächenbereiches größer als der Oberflächenspannungswert des zweiten Oberflächenbereiches ist.

3. Vorrichtung nach Anspruch 1 oder 2, dadurch gekennzeichnet,
daß der erste Oberflächenbereich aus Stahl bzw. Aluminium und der zweite Oberflächenbereich aus einem Kunststoffmaterial wie Viton oder PTFE gebildet ist.

4. Vorrichtung nach einem der Ansprüche 1 bis 3, dadurch gekennzeichnet,
daß der Abstreifer wenigstens zwei Abstreiferelemente aufweist, von denen der bei dem Glättvorgang in Vorschubrichtung vornliegende Vorabstreifer auf seiner Vorderseite den ersten Oberflächenspannungswert und das nachfolgende Abstreiferelement auf seiner der Vorderseite abgewandten Rückseite den zweiten Oberflächenspannungswert aufweist.

5. Vorrichtung nach einem der Ansprüche 1 bis 4, dadurch gekennzeichnet,
daß wenigstens einer der beiden Bereiche durch Aufbringen und insbesondere Aufkleben auf das Basismaterial angebracht ist.

6. Vorrichtung nach einem der Ansprüche 1 - 5, dadurch gekennzeichnet, daß das Bad ein lichthärtbares flüssiges Kunststoffmaterial enthält.

## Claims

1. An apparatus for main producing an object by means of stereolithography, comprising,
a container (1) for receiving a bath of liquid or powdered material (3), said material being solidifiable under the influence of electromagnetic radiation, a carrier (4) for positioning said object with respect to the surface (2) of said bath and a device (8) for solidifying a layer of said material (3) at the surface by means of electromagnetic radiation; and
a stripper (15) which is shiftable across the surface (2) of said bath, and a driving means (26) for moving said stripper (15) across the surface (2), wherein said stripper (15) comprises a first forward surface region, which extends transversally with respect to the direction of motion, and a second rearward surface region which is located opposite to said first surface region,
characterized in that
said first surface region has a first value of surface tension and the second surface region has a second value of surface tension, which is different from said first value surface tension.

2. Apparatus according to claim 1, characterized in that said first surface tension value of said first forward surface region with respect to the direction of motion during the smoothing operation is greater than the surface tension value of said second surface region.

3. Apparatus according to claim 1 or 2, characterized in that said first surface region is made of steel or aluminium and the second surface region is made of a polymeric material, such as Viton or PTFE.

4. Apparatus according to any of claims 1-3, characterized in that
the stripper comprises at least two stripping elements, wherein the pre-stripper of said stripping elements, which is located in a forward direction with respect to the direction of motion during the smoothing operation has the first value of surface tension at its front side and the following stripping element has the second value of surface tension on its rearside facing away from said frontside.

5. Apparatus according to any of claims 1 to 4, characterized in that at least one of said regions is applied by depositing, and especially by glueing the base material.

6. Apparatus according to any of claims 1 to 5 characterized in that that bath comprises a light-solidifiable liquid polymeric material.

## Revendications

1. Dispositif pour fabriquer un objet par stéréophotolithographie,
comportant un récipient (1) servant à recevoir un bain d'un matériau liquide ou à l'état de poudre (3), pouvant être solidifié par action d'un rayonnement électromagnétique, un support (4) pour positionner l'objectif par rapport à la surface (2) du bain et un dispositif (8) pour solidifier une couche du matériau (3) au niveau de la surface à l'aide d'un rayonnement électromagnétique, et
une racle (15) pouvant être déplacée le long de la surface (2) du bain, et un dispositif d'entraînement (26) pour déplacer la racle (15) le long de la surface (2), la racle (15) possédant un élément de surface avant, qui s'étend transversalement par rapport à la direction de déplacement, et un second élément de surface arrière par rapport au premier élément de surface,
caractérisé en ce
que le premier élément de surface possède une première valeur de tension de surface et le second élément de surface possède une deuxième valeur de tension de surface différente de la première.

2. Dispositif selon la revendication 1, caractérisé en ce que la valeur de tension de surface du premier élément de surface qui est situé en avant lors de l'opération de lissage dans la direction d'avance, est supérieure à la valeur de la tension de surface du second élément de surface.

3. Dispositif selon la revendication 1 ou 2, caractérisé en ce
que le premier élément de surface est réalisé en acier ou en aluminium et que le second élément de surface est formé par une matière plastique tel que du Viton ou du PTFE.

4. Dispositif selon l'une des revendications 1 à 3, caractérisé en ce
que la racle comporte au moins deux éléments de racle, parmi lesquels l'élément de racle situé en avant lors de l'opération de lissage dans la direction d'avance possède, sur sa face avant, la première valeur de tension de surface et l'élément de racle suivant possède sur sa face arrière, tournée à l'opposé de la face avant, la seconde valeur de tension de surface.

5. Dispositif selon l'une des revendications 1 à 4, caractérisé en ce
qu'au moins l'un des deux éléments de surface est disposé par application et notamment collage sur le matériau de base.

6. Dispositif selon l'une des revendications 1-5, caractérisé en ce que le bain contient une matière plastique liquide durcissable sous l'action de la lumière.
